# EUROPÄISCHE PATENTSCHRIFT

(11) **EP 0 518 338 B1**
(45) Veröffentlichungstag und Bekanntmachung des Hinweises auf die Patenterteilung: **25.08.1999**
(21) Anmeldenummer: 92109866.1
(22) Anmeldetag: 11.06.1992
(51) Int. Cl.: B32B 27/12, B32B 27/04, B32B 27/06, B32B 27/10, C08J 5/04

(54) **Umweltsicherer Verbundwerkstoff**
Environment compatible composite
Compound compatible avec l'environnement

(30) Priorität: 12.06.1991 DE 4119295
(43) Veröffentlichungstag der Anmeldung: 16.12.1992
(73) Patentinhaber: Dr. Frische GmbH, D-63755 Alzenau (DE)
(72) Erfinder: Frische, Rainer, Dr., W-6000 Frankfurt am Main (DE); Schneider, Judith, W-6000 Frankfurt am Main (DE); Schomann, Hermann, W-6070 Langen (DE); Wollmann, Klaus, W-6251 Eschhofen (DE)
(74) Vertreter: Lippert, Marianne

(56) Entgegenhaltungen:
- DE-A- 2 455 075
- DE-A- 4 019 087
- GB-A- 2 185 030
- US-A- 4 999 390

## Beschreibung

Die Erfindung betrifft ein Verfahren zum Herstellen eines umweltsicheren Verbundwerkstoffs.

Verbundwerkstoffe zählen zu den Leistungswerkstoffen und vereinen in der Regel die Vorteile unterschiedlicher Materialien des Verbunds. Insbesondere zur Steigerung der physikalischen Stabilität wird z.B. bei den unter dem Begriff Faserverbundwerkstoff zusammengefaßten Werkstoffen, deren Leistungsprofil durch Verwendung von Komponenten bestimmter geometrischer Form wie z.B. Fasern, Fäden, Geweben, Matten, Drähten oder Whiskern verbessert. Dies gilt auch für Komponenten in Form von Laminaten, mit denen Schicht-Verbundwerkstoffe hergestellt werden. Derartige Verbundkomponenten wirken sich insbesondere auf Zug- und Bruchfestigkeit, Formstabilität und Temperaturbeständigkeit des Werkstoffs aus.

Zu den bevorzugten Verbundwerkstoffen zählen insbesondere die Faserverhundwerkstoffe, bei denen das Fasermaterial zur Erzielung der gewünschten Formstabilität und Festigkeit eingesetzt wird und das die Fasern verbindende Material zur Erzielung der notwendigen Zähigkeit, Dichtigkeit und Oberflächenstrukturierung.

Ein entscheidendes Problem bei der Erzeugung von Verbundwerkstoffen sind die Verträglichkeit der Materialien des Verbunds, insbesondere die Haftfähigkeit der unterschiedlichen Materialien an- bzw. aufeinander, sowie deren individuelle thermische Ausdehnungskoeffizienten. Daher sind bei den vielfältigen Verbundwerkstoffen bzw. deren Herstellungsverfahren häufig eine Vorbehandlung des Fasermaterials und/oder ein Zusatz von Verträglichkeit gebenden Hilfsstoffen im Matrixmaterial notwendig.

Verbundwerkstoffe allgemein und insbesondere die bedeutende Gruppe der vielfältigen Kunststoff-Verbundwerkstoffe zählen zu den Werkstoffen, die unter dem Aspekt der Umweltsicherheit besonders kritisch zu beurteilen sind. Werfen schon die Kunststoffe selbst bei ihrer Entsorgung in vielen Beseitigungsstrategien Probleme auf, so gilt dies insbesondere für Verbundwerkstoffe aus Kunststoffen. Eine Weiterverwendung ist in der Regel kaum möglich, da der Materialverbund dies nicht zuläßt. Das Verbrennen solcher Werkstoffe ist häufig mit störenden Freisetzungen bzw. störenden Rückständen verbunden.

Bisherige Bemühungen und dabei entwickelte Verfahren, um anstelle der erprobten und gängigen Glasfasern Naturfasern in Form von Jutefasern einzusetzen zu können, ergaben, daß es äußerst schwierig ist, einen Verbund dieser Fasern mit dem Kunststoff überhaupt zu erzielen und die Probleme bezüglich der fehlenden Verträglichkeit sind praktisch kaum zu bewältigen. So beinhalten die bisher entwickelten Verfahren verfahrenstechnisch aufwendige Vorbehandlungen, wie z.B. die Umsetzungen des Fasermaterials mit Präpolymeren und den erforderlichen zusätzlichen Schritten, um zur endgültigen Kunststoffmatrix mit den mehr oder weniger gut darin eingebundenen Fasern zu gelangen.

Der Erfindung lag die Aufgabe zugrunde, ein möglichst einfaches Verfahren zur Herstellung eines möglichst umweltsicheren Verbundwerkstoffes zu schaffen.

Diese Aufgabe wird durch den Gegenstand des Anspruchs 1 gelöst. Vorteilhafte Weiterbildungen sind in den Unteransprüchen definiert. Im erfindungsgemäßen Verfahren werden besondere Kunststoffe des Typs Polyurethan-Polyamid zur Herstellung des Verbundes in dem Werkstoff benutzt, wobei in diesen Kunststoffen Hydroxygruppen tragende natürliche Fettsäuren oder Derivate, die in derartige Fettsäuren überführbar sind, in unveränderter Kettenlänge vorliegen, wobei die Fettsäuren in wahlweise thermoplastischen oder duroplastischen Polymeren bezüglich ihrer Carbonsäuren als Amid und bezüglich ihrer Hydroxygruppen urethanisch zum Polymer verknüpft sind. Solche Kunststoffe, in denen die Fettsäuren in unveränderter Länge vorliegen, sind, wie weiter unten erläutert, in der DE 4019087 A1 offenbart.

Im Gegensatz hierzu beschreibt die DE-A-2 455 075 eine Beschichtungsmasse, in der, wenn überhaupt, nur geringe Anteile von Fettsäuren unveränderter Länge, die Hydroxygruppen tragende natürliche Fettsäuren oder Derivate hiervon sind, enthalten sind.

So werden 80 bis 95 % Epoxyprodukte von ungesättigten Fettsäurereestern eingesetzt. Weiterhin werden diesen Epoxyprodukten 5 bis 20 % öllösliche Polyurethane zugesetzt. Die Kunststoffmassen dieser Schrift sind somit in ihrer Eigenschaft vorwiegend von der Reaktion der Epoxygruppen untereinander und der Reaktion der Epoxygruppen mit einem sogenannten "Härter" bestimmt. Diese "Härter" wird mit einem oder mehreren aliphatischen Resten der Kettenlänge C8 bis C22 sowie mit wenigstens zwei freien Carboxylgruppen im Molekül eingesetzt. Hieraus kann jedoch in der endgültigen Beschichtungsmasse kein Kunststoff mit dem im Anspruch 1 der vorliegenden Anmeldung definierten Aufbau resultieren.

Die Verarbeitung der Beschichtungsmassen erfolgt gemäß dieser Schrift stets im noch nicht durchreagierten, damit prepolymeren Zustand. Nach Auftragen der prepolmeren Masse z.B. auf Fasermatten wird die Masse in Form eines Ölgemisches ausgehärtet und damit unter Bildung von Duromeren zur Reaktion zum Endpolymer gebracht. Zum Zwecke der Materialeinsparung werden zudem gemäß dieser Schrift noch gebräuchliche Füllstoffe wie Schwerspat, Kaolin, Quarzmehl usw. vor dem Auftragen auf die Fasermatten in das Ölgemisch eingebracht. Diese Füllstoffe sind allerdings nicht mit den Im Anspruch 1 definierten Naturmaterialen vergleichbar.

Danach gelang es den Erfindern, unter Verwendung der im Anspruch gekennzeichneten Polymermaterialien mit den angegebenen Naturkomponenten neue, vollständig umweltsichere, auf vielfältige Weise und auch einfach herstellbare Verbundwerkstoffe mit hervorragenden thermischen und mechanischen Eigenschaften zu schaffen. Polymermaterialien dieser Art lagen den Erfindern zwar bereits vor (DE 4019087 A1) und waren von ihnen selbst erstmalig z.B. als Polyurethan-Polyamide aus Pflanzenölen mit guten Haft- und Struktureigenschaften synthetisiert worden, jedoch war aufgrund der bisherigen Erfahrungen weder zu erwarten, daß sich diese Polymermaterialien überhaupt mit den Naturfasern vertragen würden, noch, daß die resultierenden Verbundmaterialien darüberhinaus die ermittelten überragenden mechanischen und thermischen Eigenschaften aufweisen könnten.

So wurde überraschend festgestellt, daß sich ohne jegliche Verwendung von Schlichten oder Haftvermittlern z.B. Polyurethan-Polyamide der angegebenen Art völlig problemlos mit Jutefasern zu einem Verbundwerkstoff außergewöhnlicher Festigkeit in Bezug auf thermische und mechanische Stabilität sowie Formstabilität verarbeiten ließen.

Die mechanische und thermische Stabilität bleiben dabei Ober äußerst weite Temperaturbereiche und insbesondere auch oberhalb 100 °C erhalten.

Ferner wurde ermittelt, daß eine sehr gute Verträglichkeit auch zu diversen anderen Naturkomponenten vorliegt, wie sie beispielsweise in den Unteransprüchen gekennzeichnet sind. Darüberhinaus stellte sich heraus, daß der Füllgrad der Verbundwerkstoffe äußert hoch sein kann. So lassen sich Gehalte von 75 vol.% Fasermaterial problemlos erzielen, ohne daß das resultierende Verbundmaterial Inhomogenitäten und Strukturstörungen aufweist. Dies ist insbesondere vor dem Hintergrund der bisherigen Schwierigkeiten, Jutefasern in herkömmliche Kunststoffe überhaupt in irgendeiner Weise einzubetten, bemerkenswert.

Ferner gelang es ohne weitere Maßnahmen, hydrophobe nicht quellende Verbundwerkstoffe selbst bei den hohen Fasergehalten herzustellen. Falls erwünscht, können jedoch auch mit den angegebenen Verbundmaterialien durchaus hydrophobe Werkstoffe hergestellt werden.

Neben den fertigungstechnischen- und Stabilitätseigenschaften zeichnen sich die erfindungsgemäßen Verbundwerkstoffe insbesondere durch ihre gegenüber allen bisherigen Kunststoff-Verbundwerkstoffen neue Umweltsicherheit aus.

Zum einen sind sämtliche in den erfindungsgemäß hergestellten Verbundwerkstoffen verarbeiteten Materialien in der Umwelt in mehr oder weniger langen Zeiträumen zu Abbauprodukten zerlegbar, die mikrobiell schnell abgebaut werden können. In die Umwelt gelangte Werkstoffe der erfindungsgemäßen Art können damit selbst dann zu keiner Umweltgefährdung führen, wenn sie in der Umwelt verbleiben, beispielsweise eingegraben sind.

Zum anderen lassen sie sich durch Verbrennen in üblichen Abfallverbrennungsanlagen ohne Zusatzaufwand problemlos entsorgen, wobei anders als z.B. bei den mit Mineralfasern verstärkten Werkstoffen praktisch keine Rückstände verbleiben.

Weiterhin trägt zur Umweltsicherheit bei, daß die Werkstoffe im Gegensatz zu Werkstoffen aus Petrokunststoffen bis auf wenige Prozent praktisch vollständig aus nachwachsenden Rohstoffen aufgebaut sind und damit im Prinzip aus fixiertem, atmosphärischem Kohlendioxid bestehen. Der Gebrauch derartiger Werkstoffe hat damit eine CO₂-entlastende Wirkung und erst im Fall ihrer Verbrennung wird das in ihnen enthaltene CO₂ wieder freigesetzt.

Das erfindungsgemäße Verfahren kann auf einfache und vielfältige, praktisch beliebige Weise mit diversen Naturkomponenten erfolgen. So sind Fasern, Fliese, Gewebe, Matten oder Laminate aus Naturfasern- oder -stoffen sowie auch Kombinationen hiervon im gekennzeichneten Kunststoff einbettbar. Solche Laminate umfassen z.B. Holzfurniere und Papiere. Neben den Jutefasern eignen sich beispielsweise Holzwolle, Holzmehl, Sägespäne, Holzschliff sowie Strohhäcksel.

Je nach Art der einzubettenden Komponenten und in Abhängigkeit davon, ob in duro- oder thermoplastischem Kunststoff auf der Basis natürlicher Fettsäuren eingebettet werden soll, werden verschiedene, prinzipiell z.B. aus der Technik zur Herstellung von glasfaserverstärkten Kunststoffen bekannte Verfahren angewandt. Dabei wird beim Einsatz duroplastischen Kunststoffs noch nicht vollständig zum Polymer umgesetztes großmolekulares Material mit dem einzubettenden Material zusammengebracht und dann zum formstabilen Werkstoff umgesetzt. Bei thermoplastischem Material kann ebenso vorgegangen werden oder auch der vollständig umgesetzte Kunststoff mit den obigen Naturkomponenten zusammengebracht werden. Dabei entstehen in gewissem Umfang durch Erhitzen umformbare Werkstoffe.

Fliese, Matten und Gewebe aus Naturfasern sind beispielsweise mit Folienmaterialien aus Kunststoff durch Thermopressen zu den Verbundmaterialien verarbeitbar, wobei sowohl der Anteil der Komponenten im Werkstoff, als auch die Materialdicken vorgebbar ist.

Daneben sind andere Verfahren wie Spritzgieß- oder Spritzpreßverfahren anwendbar, bei denen das Einbettmaterial zuvor in die entsprechenden Formmassen eingebracht wird.

Je nach Zusammensetzung und Eigenschaften des verwendeten Kunststoffmaterials auf der Basis natürlicher Fettsäuren sind abhängig vom Kunststoffschmelzpunkt unterschiedlichste Verfahrenstemperaturen von niedrigen Temperaturen z.B. von nur 60 °C bis Ober 150 °C möglich. Erfindungsgemäß kann wie z.B. bei Jutefasern in vielen Fällen auf die Verwendung von Schlichten oder Haftvermittlern gänzlich verzichtet werden, wodurch sich die Verfahren erheblich vereinfachen.

Die im Anspruch 1 zur Herstellung des Verbundes angegebenen Kunststoffe sind aus natürlichen Ölen und Fetten (z.B. der Öl- oder Ricinolsäure) gewinnbar und zeichnen sich dadurch aus, daß sie natürliche Hydroxygruppen tragende Fettsäuren bzw. deren ebenfalls Hydroxygruppen tragende Derivate mit unveränderter Kettenlänge aufweisen. Dabei sind die Carbonsäuren der Fettsäuren entweder als Amid verknüpft und die Hydroxygruppen sind urethanisch verknüpft. Welche Art von urethanisch bzw. amidisch verknüpften Diolen, Polyolen oder Diaminen im Kunststoff enthalten sind, hängt davon ab, welche Art von amidbildenden Verbindungen und von bi- oder multifunktionellen Verbindungen (Di- oder Polyisocyanate, Dicarbonsäuren, Diolen, Aminoalkoholen usw.) zur Umsetzung zu Polymeren der Fachmann auswählt.

Soweit überhaupt erforderlich oder gewünscht, kann der Fachmann jeweils geeignete Lösungsmittel für die Umsetzung der ungesättigten Fette und Öle bzw. ungesättigten und/oder hydroxylgruppenhaltigen Fettsäuren, von denen bei der Kunststoffzubereitung ausgegangen wird, im Hinblick auf das gewünschte Ausgangsmaterial auswählen und ermitteln. Dies gilt auch für die Umsetzungsbedingungen. Will er sich diese zumutbare Auswahlarbeit bei der Herstellung von im Anspruch 1 gekennzeichneten Kunststoffen ersparen, so kann er auch nach den Beispielen und Anweisungen vorgehen, die in der eingangs erwähnten DE 4019087 A1 dargelegt sind. Mit dem Verweis auf diese Schriften wird deren vollständige Offenbarung auch Inhalt der vorliegenden Anmeldung.

So ist aus der DE 4019087 A1 "Neuartige Kunststoffe auf Fettsäurebasis" entnehmbar, wie ungesättigte und/oder hydroxylgruppenhaltige Fettsäuren oder deren Ester über die Carboxylgruppe durch Diole, Diamine oder Aminoalkohole als Bindeglied verknüpft werden und die über die Carboxylfunktion verknüpften Fettsäurebausteine urethanisch zu thermoplastischen Polymeren verknüpft werden. Stellt man für die urethanische Verknüpfung mehr als zwei reaktive Hydroxygruppen zur Verfügung, so kommt man entsprechend zu vernetzten Kunststoffen. Verwendet man für die erfindungsgemäße Herstellung des Verbundwerkstoffs nicht das fertige Polymer sondern die genannten Fettsäurebausteine, die bereits relativ groß sind, so erfordert die noch nötige Verknüpfungsreaktion relativ wenig Verknüpfungsreaktionen. Es ist nicht nötig, von sonst üblichen Präpolymeren auszugehen.

Die DE 4019087 A1 offenbart Kunststoffe, in denen die aus natürlichen Ölen und Fetten gewinnbaren Fettsäuren bzw. deren Ester nicht gespalten sind und in unveränderter Länge vorliegen.

Neben den in der DE 4019087 A1 angeführten Stoffbeispielen wurden von den Erfindern inzwischen weitere Kunststoffe ebenfalls nach dem Anspruch 1 der vorliegenden Anmeldung zugrundeliegenden Prinzipien erstellt, die stets einem schadlosen mikrobiellen Abbau in der Umwelt zugänglich sind.

Von den umfangreichen bisher hergestellten Verbundstoffen, sollen die folgenden Beispiele aufzeigen, wie einfach und unproblematisch erfindungsgemäße Verbundstoffe herstellbar sind.

Es wurden zunächst Kunststoffpreßlinge von etwa 10 cm Durchmesser und einer Dicke von 0,2 bis 0,5 cm u.a. gemäß den in der DE 4019087 A1 angegebenen Beispielen 1 bis 6 hergestellt. Hierbei handelte es sich um Polyurethanamide bzw. Polyamidurethane, die auf der Basis von Ricinusöl gewonnen wurden.

Darüberhinaus wurden derartige Preßlinge auch aus den folgenden Kunststoffen hergestellt.

Verbundkörper wurden dann mit diesen Preßlingen hergestellt, wobei außer im Fall des Aufbügelns mit einem Druck von 10 t und bei einer Temperatur zwischen etwa 160 °C und 200 °C gearbeitet wurde.
I. 3,45g Bis[12-hydroxystearinsäure]-1,2-N,N-ethylendiamid, hergestellt aus gehärtetem Ricinusöl und 1,2-Diaminoethan (gemäß Beispiel a der DE 4019087) und 0,46g 1,4 Butandiol wurden auf 160 °C erhitzt. Unter Stickstoffatmosphäre wurden 1,68g Hexamethylendiisocyanat zugegeben. Die Reaktionsmischung wurde eine Stunde bei 160 °C gehalten. Das hierbei entstandene Polyamidpolyurethan war thermoplastisch verarbeitbar.
II. 2,50g Bis[12-hydroxystearinsäure]-1,2-N,N-ethylendiamid hergestellt aus gehärtetem Ricinusöl und 1,2-Diaminoethan (wie in I) und 0,54g 1,4 Butandiol wurden auf 160 °C erhitzt. Unter Stickstoffatmosphäre wurden 1,68g Hexamethylendiisocyanat zugegeben. Die Reaktionsmischung wurde 1 Stunde bei 160 °C gehalten. Das hierbei entstandene Polyamidpolyurethan war thermoplastisch verarbeitbar.
III. 1,23 Bis[milchsäure]ethylendiamid, 2,50g Bis[12-hydroxystearinsäure]-1,2-N,N-ethylendiamid wurden auf 160°C erhitzt. Unter Stickstoffatmosphäre wurden 1,68g Hexamethylendiisocyanat zugegeben. Die Reaktionsmischung wurde 1 Stunde bei 160 °C gehalten. Das entstandene Polyamidpolyurethan war thermoplastisch verarbeitbar.
IV. 2,50g eines Gemischs aus 9- und 10-[Bis-hydroxystearinsäure]-1,2-N,N-ethylendiamid, hergestellt durch Hydrierung von epoxiertem Euphorbiaöl, und 0,54g 1,4 Butandiol wurden auf 160 °C erhitzt. Unter Stickstoffatmosphäre wurden 1,68g Hexamethylendiisocyanat zugegeben. Die Reaktionsmischung wurde 1 Stunde bei 160 °C gehalten. Das entstandene Polyamidpolyurethan war thermoplastisch verarbeitbar.
V. 1,25g Bis[12-hydroxystearinsäure]-1,2-N,N-ethylendiamid, hergestellt wie in I, und 0,72g 1,4 Butandiol wurden auf 160 °C erhitzt. Unter Stickstoffatmosphäre wurden 1,68g Hexamethylendiisocyanat zugegeben. Die Reaktionsmischung wurde eine Stunde bei 160 °C gehalten. Das entstandene Polyamidpolyurethan war thermoplastisch verarbeitbar.
VI. 3,75g Bis[12-hydroxystearinsäure]-1,2-N,N-ethylendiamid, hergestellt wie in I, und 0,36g 1,4 Butandiol wurden auf 160 °C erhitzt. Unter Stickstoffatmosphäre wurden 1,68g Hexamethylendiisocyanat zugegeben. Die Reaktionsmischung wurde eine Stunde bei 160 °C gehalten. Das entstandene Polyamidpolyurethan war thermoplastisch verarbeitbar.
VII. 2,50g Bis[12-hydroxystearinsäure]-1,2-N,N-ethylendiamid, hergestellt aus gehärtetem Ricinusöl und 1,2-Diaminoethan (wie in I), und 0,46g Propandiol wurden auf 160 °C erhitzt. Unter Stickstoffatmosphäre wurden 1,68g Hexamethylendiisocyanat zugegeben. Die Reaktionsmischung wurde 1 Stunde bei 160°C gehalten. Das entstandene Polyamidpolyurtehan war thermoplastisch verarbeitbar.

Die gemäß den folgenden Beispielen aus den oben genannten Kunststoffscheiben hergestellten Verbundstoffe waren sämtlich außerordentlich stabil.

### Beispiel 1

8,0 g Jute wurden 5 min bei 165 °C und unter einem Druck von 10 t zwischen zwei Kunststoff-Folien von je 3,0 g eingebettet.

### Beispiel 2

Bei gleichem Druck und gleicher Temperatur wurden in 10 min folgende Schichten fest zusammengefügt: 2,0 g Kunststoff, 2,5 g Rüsterfurnier, 1,5 g Kunststoff, 8,0 g Jute, 1,5 g Kunststoff, 2,5 g Rüsterfurnier, 2,0 g Kunststoff.

### Beispiel 3

Unter den Bedingungen von Beispiel 1 wurde eine Pappscheibe von 4 g zwischen zwei Kunststoffpreßlingen von 2 g eingebettet.

### Beispiel 4

Unter den Bedingungen von Beispiel 1 wurde eine Korkfolie von 10 g zwischen zwei Kunststoffpreßlingen von 2 g eingebettet.

### Beispiel 5

Bei gleichem Druck und gleicher Temperatur wurden in 10 bis 15 min folgende Schichten fest zusammengefügt: 3,0 g Kunststoff, 8,0 g Jute, 2,0 g Kunststoff, 8,0 g Jute, 2,0 g Kunststoff, 8,0 g Jute, 2,0 g Kunststoff.

### Beispiel 6

7 Lagen Flachglas von 1 mm Dicke wurden jeweils abwechselnd geschichtet mit 6 Kunststoff-Folien von 0,2 mm Dicke und gleicher Größe unter leichtem Klammerdruck durch einstündige Temperung bei 160 °C im Trockenschrank miteinander verbunden. Nach Abkühlen entsteht eine feste Verbindung und ein insgesamt klarer und durchsichtiger Verbundstoff. Bei Erwärmung können die Glaslagen wieder gelöst werden.

### Beispiel 7

Auf eine Pappscheibe von 4 g wird eine Kunstoff-Folie von 0,3 mm Dicke mittels eines Bügeleisens bei Temperaturen zwischen etwa 160 und 180 °C aufgebügelt. Es entsteht eine sehr fest haftende klare Schicht. Die Stabilität der Pappe ist deutlich erhöht.

### Beispiel 8

Es wird wie im Beispiel 7 vorgegangen, jedoch vor dem Aufbügeln Elektrolytkupferpulver (Pulvergröße geringer als 0,5 µm) auf die Pappe gelegt, das fest eingebaut wird und den Verbund nicht stört.

Als Pflanzenöle zur Erzeugung der Kunststoffe für den Verbundwerkstoff wurden ferner hydriertes Ricinusöl, High-Oleic-Öle sowie andere stark ungesättigte Öle und Fette nach überführung in die entsprechenden Hydroxyfettsäuren eingesetzt. Als Isocyanatkomponenten wurden auch andere gängige Di- und Polyisocyanante eingesetzt, wie sie auch in den genannten Patentanmeldungen aufgeführt sind.

## Patentansprüche

1. Verfahren zum Herstellen eines umweltsicheren Verbundwerkstoffs unter Einsatz von Naturmaterialien in Form von Naturfasern, -fäden, -geweben, -mehlen oder -laminaten und von Kunststoffen des Typs Polyurethan-Polyamid zur Herstellung des Verbundes in dem Werkstoff, wobei in diesen Kunststoffen Hydroxygruppen tragende natürliche Fettsäuren oder Derivate, die in derartige Fettsäuren überführbar sind, in unveränderter Kettenlänge vorliegen, wobei die Fettsäuren in wahlweise thermoplastischen oder duroplastischen Polymeren bezüglich ihrer Carbonsäuren als Amid und bezüglich ihrer Hydroxygruppen urethanisch zum Polymer verknüpft sind, und wobei im Fall der Herstellung des Verbundes mit derartigen thermoplastischen Kunststoffen die damit zusammenzufügenden Naturmaterialien wahlweise mit noch nicht zum Polymer durchreagierten Fettsäurebausteinen oder mit dem fertigen thermoplastischen Polymer in an sich bekannter Weise zusammengebracht werden und im Fall der Herstellung des Verbundes mit derartigen duroplastischen Kunststoffen die Naturmaterialien stets mit den noch nicht zum Polymer durchreagierten Fettsäurebausteinen zusammengebracht werden.

2. Verfahren nach Anspruch 1,
dadurch gekennzeichnet,
daß als die Naturlaminate und -gewebe Holzfurniere, Papiere, Fliese und Matten und als die Naturfasern und -mehle Jutefasern, Strohhäcksel, Holzschliff, Holzwolle, Sägespäne und Holzmehl eingesetzt werden.

3. Verfahren nach Anspruch 1 oder 2,
dadurch gekennzeichnet,
daß die Naturmaterialien in solchen Mengen zugesetzt werden, daß der Füllstoffgehalt an den mit den Kunststoffen verbundenen Naturmaterialien bis zu mehr als 75 Vol.% beträgt.

## Claims

1. Method for producing an environment compatible composite using natural materials in form of natural fibers, natural thread fibers, natural fabrics, natural flours or natural laminates and using plastics of the type polyurethane polyamides for establishing the composite action in the composite, wherein natural fatty acids carrying hydroxyl groups or derivatives which can be converted into such fatty acids, are existent with unchanged chain length in said plastics, said fatty acids being linked to the polymer as amides regarding their carboxylic acid and urethanically regarding their hydroxyl groups in optionally thermoplastic or duroplastic polymers and wherein, when establishing the composite action with such thermoplastics, the natural materials to be linked therewith are optionally brought together, in a manner known per se, with fatty acid components not already reacted into the polymer or with the completed thermoplastic polymers and wherein, when establishing the composite action with such duroplastics, the natural materials are always brought together with fatty acid components not already reacted into the polymer.

2. Method according to claim 1,
characterized in that veneer woods, papers, non-woven fabrics and mats are used as said natural laminates and natural fabrics and that jute fibers, chopped straw, mechanical wood pulp, sawdust and wood flour are used as said natural fibers and natural flours.

3. Method according to claim 1 or 2,
characterized in that said natural materials are added in such amounts that the filler percentage of said natural materials linked with said plastics may be more than 75 percent by volume.

## Revendications

1. Procédé pour fabriquer un matériau composite non-polluant en employant des matières naturelles sous forme de fibres, fils, tissus, farines naturels ou agglomérés laminés naturels et des matières plastiques du type polyuréthane-polyamide pour faire la composite au sein du matériau composite, ces matières plastiques contenant des acides gras naturels portant des hydroxyles, ou des dérivés pouvant être transformés en les dits acides gras, lesquels acides gras naturels ou dérivés présentant une longueur de chaîne inaltérée, les acides gras étant combinés sélectivement à des polymères thermoplastiques ou thermodurcisseurs en formant un amide par rapport à leurs acides carboxyliques et de manière uréthanique en polymère par rapport à leurs hydroxyles, et en cas de formation du matériau composite avec les dites matières thermoplastiques, les matières naturelles à combiner avec les dernières sont combinées de manière connue en soi sélectivement avec des composants d'acides gras n'ayant pas encore présenté la réaction complète qui les transforme en polymère, ou avec le polymère thermoplastique fini, et en cas de formation du matériau composite avec les dites matières plastiques thermodurcissantes, les matières naturelles sont oombinées de manière continue avec les composants d'acides gras n'ayant pas encore présenté la réaction complète qui les transforme en polymère.

2. Procédé selon la revendication 1,
caractérisé en ce qu'en tant qu'agglomérés laminés naturels et tissus naturels on utilise du bois contreplaqué, des papiers, des carreaux et des nattes, et en tant que fibres et farines naturelles on utilise des fibres de jute, de la paille hachée, de la pâte de bois mécanique, de la laine de bois, des brans de bois et de la farine de bois.

3. Procédé selon la revendication 1 ou 2,
caractérisé en ce que les matières naturelles sont ajoutées en telles quantités que la part de matières de remplissage des matières naturelles combinées avec les matières plastiques soit de jusqu'à de plus de 75 pourcents volumétriques.
